# EUROPEAN PATENT APPLICATION

(11) **EP 2 963 376 A1**
(43) Date of publication of application: **06.01.2016**
(21) Application number: 14757430.5
(22) Date of filing: 07.02.2014
(51) Int. Cl.: F28F 9/18, F28D 7/16

(54) **HEAT EXCHANGER AND METHOD FOR MANUFACTURING HEAT EXCHANGER**

(30) Priority: 28.02.2013 JP 2013038189
(71) Applicant: Mitsubishi Heavy Industries, Ltd., Tokyo 108-8215 (JP)
(72) Inventor: OGUMO, Shinya, Tokyo 108-8215 (JP); USUI, Yukinori, Tokyo 108-8215 (JP); HIRAYAMA, Tomoyuki, Tokyo 108-8215 (JP); KAMO, Kazuhiko, Tokyo 108-8215 (JP)
(74) Representative: Intès, Didier Gérard André
(86) International application number: PCT/JP2014/052836
(87) International publication number: WO 2014/132772

(57) **Abstract**

A clearance (C) is provided between the inner circumferential surface of cylindrical stubs (22) (which protrude toward the outlet-side and inlet-side water chambers (14, 15) of outlet-side and inlet-side tube plates (11a, 11b) and the outer circumferential surface at the end part of heat transfer tubes (12) inserted into the stubs (22), and the end faces of the inside tube parts (24a) and the outside tube parts (24b) of grooved end pieces (24) are laser-welded to the end faces of the heat transfer tubes (12) and the stubs (22) from the inner-surface side of the heat transfer tube (12), with the weld height of the end faces of the outside tube parts (24b) and the end faces of the stubs (22) and the weld height of the end faces of the inside tube parts (24a) and the end faces of the heat transfer tubes (12) corresponding to each other, thereby enabling butt-welding to be performed in one pass.

## Description

### Technical Field

The present invention relates to a shell-and-tube type heat exchanger which performs heat exchange by indirect contact between fluids having different temperatures, and a method for manufacturing the heat exchanger.

### Background Art

As a shell-and-tube type multitubular heat exchanger, in the related art, heat exchangers having tube-tube plate joint structures as shown in Figs. 10 to 12 are disclosed in PTL 1.

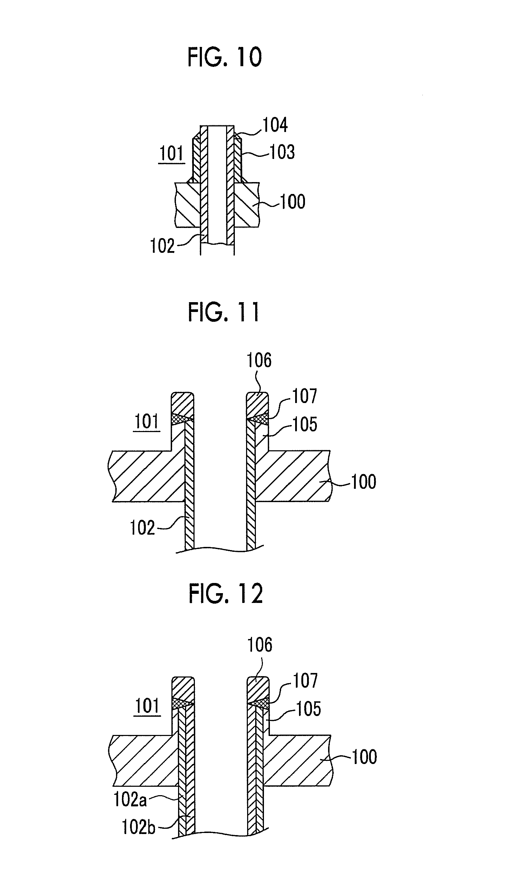

The tube-tube plate joint structure shown in Fig. 10 is configured so as to weld a short tube-shaped tube stand 103 through which a heat transfer tube 102 can pass, to the surface (the surface on the water chamber 101 side) of a tube plate 100, make an end portion of the heat transfer tube 102 pass through the tube stand 103 and the tube plate 100, thereby protruding from the tip of the tube stand 103 by a predetermined amount, and weld the outer circumference of a protrusion portion from the tube stand 103, of the heat transfer tube 102, to the tip of the tube stand 103. Specifically, the heat transfer tube 102 is made to pass through the tube plate 100 and the tube stand 103, the heat transfer tube 102 is fixed in close contact with (the hole inner surface of) the tube plate 100 by tube expansion treatment, and thereafter, the entire circumference of an end portion of the tube stand 103 is welded to the outer circumferential surface of the heat transfer tube 102, thereby forming a fillet welded portion 104.

In the tube-tube plate joint structure shown in Fig. 11, a stub 105 is integrally formed at a peripheral border located on the water chamber 101 side, of a hole drilled in the tube plate 100, an end portion of the heat transfer tube 102 is inserted into the hole drilled in the tube plate 100 and the stub 105 to the same height as the stub 105, and thereafter, the heat transfer tube 102 is fixed in close contact with (the hole inner surface of) the tube plate 100 by tube expansion treatment. Then, in order to enhance liquid-tightness between the tube plate 100 and the stub 105, and the heat transfer tube 102, a configuration is made such that a ring-shaped end piece 106 is butt-connected to the end faces of the stub 105 and the heat transfer tube 102 and a build-up welded portion 107 is formed over the entire circumference in a groove portion in which the stub 105 and the heat transfer tube 102 face the end piece 106, by TIG welding or the like.

In the tube-tube plate joint structure shown in Fig. 12, in order to strengthen the boundary between a heating fluid (medium) and a fluid (medium) to be heated in the tube-tube plate joint structure shown in Fig. 11, the heat transfer tube 102 in Fig. 11 is configured as a double tube composed of an outside heat transfer tube 102a and an inside heat transfer tube 102b, and other configurations are the same as those in Fig. 11, and therefore, the same members as those in Fig. 11 are denoted by the same reference numerals and overlapping description is omitted.

### Citation List

### Patent Literature

[PTL 1] Japanese Patent No. 4865256

### Summary of Invention

### Technical Problem

However, in the tube-tube plate joint structure shown in Fig. 10, the heat transfer tube 102 is inserted into the hole of the tube plate 100 and the heat transfer tube 102 and the tube plate 100 are welded to each other from the water chamber side, whereby the fillet welded portion 104 is formed, and therefore, there is the advantage that manufacturability is excellent. However, there are problems in that since a thickness changes around the fillet welded portion 104, volumetric inspection such as radiation transmission inspection (RT inspection) is difficult and in a case where a load is applied to a joining portion between the heat transfer tube 102 and the tube stand 100 under an operation of equipment, stress concentration on a joint portion is increased due to the discontinuity (base materials are not integrated with each other) of the joining portion, whereby reliability is reduced.

Further, in the tube-tube plate joint structures shown in Figs. 11 and 12, the heat transfer tube 102 is inserted into the hole of the tube plate 100 and the build-up welded portion 107 is formed in the groove portion in which the stub 105 and the heat transfer tube 102 (the outside heat transfer tube 102a and the inside heat transfer tube 102b) face the end piece 106, from the water chamber side, and therefore, similarly to the structure shown in Fig. 10, there are the advantages that manufacturability is excellent and that since a thickness does not change around the build-up welded portion 107, volumetric inspection such as radiation transmission inspection (RT inspection) becomes possible. However, there is a problem in that in a case where a load is applied to the joining portion between the heat transfer tube 102 (the outside heat transfer tube 102a and the inside heat transfer tube 102b) and the tube stand 100, and the end piece 106, under an operation of equipment, stress concentration on a joint portion is increased due to the structure discontinuity (base materials are not integrated with each other) of the joining portion, whereby reliability is reduced, similarly to the structure shown in Fig. 10.

The present invention has been proposed in view of such actual circumferences and has an object to provide a heat exchanger in which reliability can be enhanced by effectively reducing stress concentration on a welded portion under an operation of equipment while maintaining ease of manufacturing and ease of inspection, and a method for manufacturing the heat exchange.

### Solution to Problem

In order to achieve such an object, according to an aspect of the present invention, there is provided a heat exchanger including:
a heat transfer tube provided between tube plates,
wherein a clearance is provided between an inner circumferential surface of a cylindrical stub protruding toward a water chamber side of each of the tube plates and an outer circumferential surface of an end portion of the heat transfer tube which is inserted into the stub, and
an inside and an outside end faces of a ring-shaped and grooved end piece are butt-welded to end faces of the heat transfer tube and the stub with the outside end face made to correspond to the end face of the stub and the inside end face made to correspond to the end face of the heat transfer tube.

In a case where materials of the tube plate and the heat transfer tube are the same, inside and outside end faces of the end piece of the same material as these materials are directly joined to the end faces of the heat transfer tube and the stub.

In a case where materials of the tube plate and the heat transfer tube are different from each other, the outside end face of the end piece of the same material as the heat transfer tube is joined to the end face of the stub on which a build-up welded portion is formed of the same material as the end piece in advance.

Weld heights of the inside and outside end faces of the end piece are the same.

Weld heights of the inside and outside end faces of the end piece are different from each other.

The heat transfer tube is a multiple tube.

In order to achieve such an object, according to another aspect of the present invention, there is provided a method for manufacturing a heat exchanger in which a large number of heat transfer tubes are provided between tube plates, the method including:
inserting the respective heat transfer tubes into the tube plates and a large number of cylindrical stubs protruding toward a water chamber side of the tube plates with a clearance provided between an outer circumferential surface of an end portion of each of the heat transfer tubes and an inner circumferential surface of each of the stubs; and
respectively butt-welding an inside and an outside end faces of a ring-shaped and grooved end piece to end faces of each of the heat transfer tubes and each of the stubs with the outside end face made to correspond to the end face of each of the stubs and the inside end face made to correspond to the end face of each of the heat transfer tubes.

In a case where materials of the tube plate and the heat transfer tube are the same, inside and outside end faces of the end piece of the same material as these materials are directly joined to the end faces of the heat transfer tube and the stub.

In a case where materials of the tube plate and the heat transfer tube are different from each other, the outside end face of the end piece of the same material as the heat transfer tube is joined to the end face of the stub on which a build-up welded portion is formed of the same material as the end piece in advance.

The inside and outside end faces of the end piece are joined at the same weld height.

The inside and outside end faces of the end piece are joined at different weld heights.

### A multiple tube is used for the heat transfer tube. Advantageous Effects of Invention

According to the heat exchanger and the method for manufacturing a heat exchanger according to the present invention, by providing a clearance between the inner circumferential surface of the stub of the tube plate and the outer circumferential surface of the end portion of the heat transfer tube and butt-welding the inside and outside end faces of the end piece to the end faces of the heat transfer tube and the stub, it is possible to reduce structure discontinuity of the respective joining portions of the heat transfer tube and the stub, and reliability is enhanced by effectively reducing stress concentration on a welded portion under an operation of equipment. In addition, manufacturability can be secured due to welding from the water chamber side, and a change in the thickness of a welded portion is eliminated, and thus volumetric inspection such as radiation transmission inspection (RT inspection) becomes possible.

Further, in a case where the materials of the tube plate and the heat transfer tube are the same, the inside and outside end faces of the end piece of the same material as these materials are directly joined to the end faces of the heat transfer tube and the stub, whereby welding work can be quickly performed.

Further, in a case where the materials of the tube plate and the heat transfer tube are different from each other, the outside end face of the end piece of the same material as the heat transfer tube is joined to the end face of the stub in which the build-up welded portion is formed of the same material as the end piece in advance, whereby joining between different materials becomes possible and a thermal shock to welded portions of different materials can also be reduced.

Further, if the weld heights of the inside and outside end faces of the end piece are the same, it becomes possible to perform laser welding in one pass from the inner surface side or the outer surface side of the end piece, and thus the number of manufacturing processes can be significantly reduced. Further, welding is performed from the inner surface side of the end piece, whereby compacting of equipment becomes possible due to a tube pitch reduction.

Further, if the weld heights of the inside and outside end faces of the end piece are different from each other, it becomes possible to individually perform welding from the inner surface side and the outer surface side of the end piece, and thus it is possible to perform welding while reliably maintaining the clearance.

Further, the heat transfer tube may be a single tube. However, a multiple tube is used, whereby strengthening of the boundary between a heating fluid (medium) and a fluid (medium) to be heated can be attained.

### Brief Description of Drawings

Fig. 1 is a longitudinal cross-sectional view of the overall configuration of a heat exchanger showing Example 1 of the present invention.
Fig. 2 is an enlarged detail view of a portion A of Fig. 1.
Fig. 3 is an enlarged detail view of the portion A of Fig. 1, showing a change example of a weld height, in which Fig. 3A shows a case where an inside end face of an end piece is higher than an outside end face and Fig. 3B shows a case where an inside end face of an end piece is lower than an outside end face.
Fig. 4 is an enlarged detail view of the portion A of Fig. 1, showing Example 2 of the present invention.
Fig. 5 is an enlarged detail view of the portion A of Fig. 1, likewise showing a change example of a weld height, in which Fig. 5A shows a case where an inside end face of an end piece is higher than an outside end face and Fig. 5B shows a case where an inside end face of an end piece is lower than an outside end face.
Fig. 6 is an enlarged detail view of the portion A of Fig. 1, showing Example 3 of the present invention.
Fig. 7 is an enlarged detail view of the portion A of Fig. 1, likewise showing a change example of a weld height, in which Fig. 7A shows a case where an inside end face of an end piece is higher than an outside end face and Fig. 7B shows a case where an inside end face of an end piece is lower than an outside end face.
Fig. 8 is an enlarged detail view of the portion A of Fig. 1, showing Example 4 of the present invention.
Fig. 9 is an enlarged detail view of the portion A of Fig. 1, likewise showing a change example of a weld height, in which Fig. 9A shows a case where an inside end face of an end piece is higher than an outside end face and Fig. 9B shows a case where an inside end face of an end piece is lower than an outside end face.
Fig. 10 is a cross-sectional view of a main section of a tube-tube plate joint structure of an example of the related art.
Fig. 11 is a cross-sectional view of a main section of a tube-tube plate joint structure of a different example of the related art.
Fig. 12 is a cross-sectional view of a main section of a tube-tube plate joint structure of a further different example of the related art.

### Description of Embodiments

Hereinafter, a heat exchanger and a method for manufacturing a heat exchanger according to the present invention will be described in detail by examples by using the drawings.

### Example 1

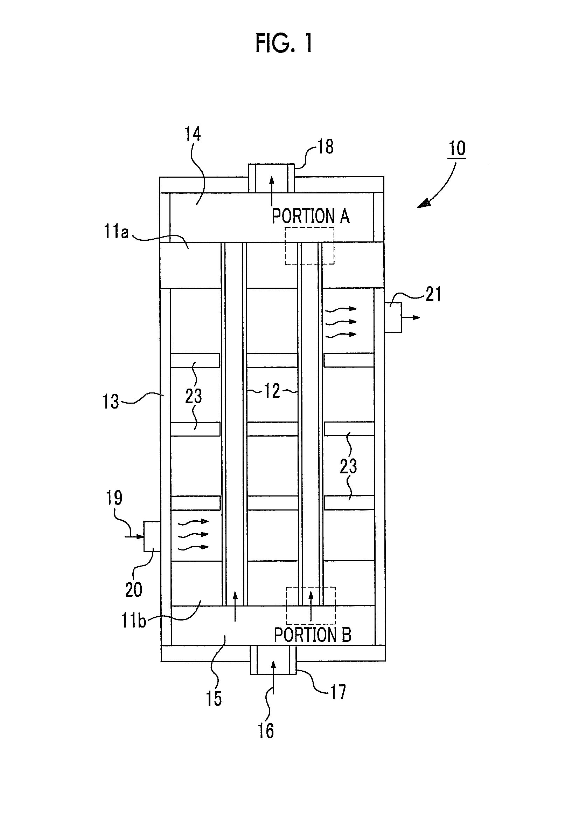

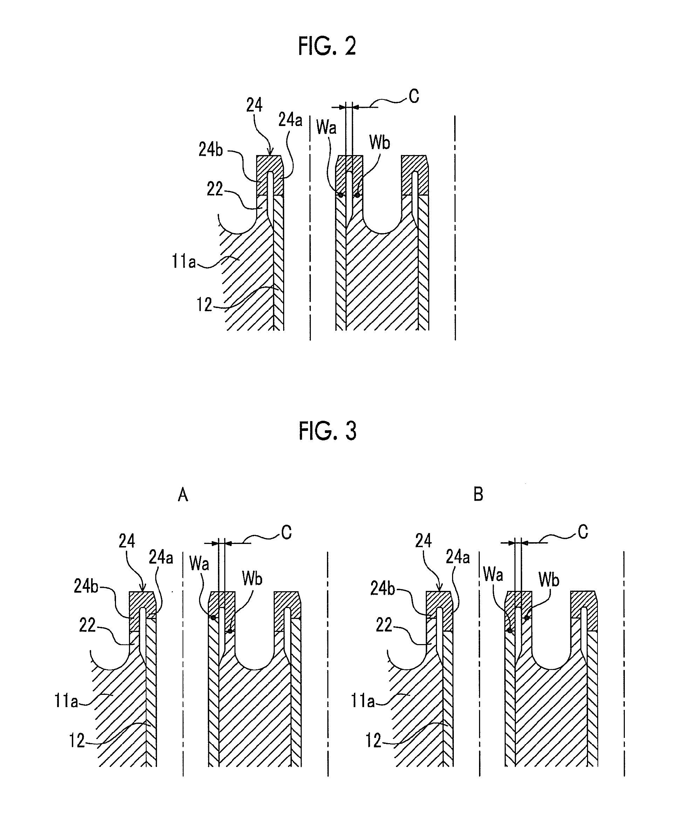

Fig. 1 is a longitudinal cross-sectional view of the overall configuration of a heat exchanger showing Example 1 of the present invention, Fig. 2 is an enlarged detail view of a portion A of Fig. 1, and Fig. 3 is an enlarged detail view of the portion A of Fig. 1, showing a change example of a weld height, in which Fig. 3A shows a case where an inside end face of an end piece is higher than an outside end face (is located on the upper side in Fig. 3A) and Fig. 3B shows a case where an inside end face of an end piece is lower than an outside end face (is located on the lower side in Fig. 3B).

As shown in Fig. 1, a heat exchanger 10 of this example is a shell-and-tube type multitubular heat exchanger in which a large number of heat transfer tubes 12 are provided between both upper and lower tube plates 11a and lib. As a heating fluid (medium), hot water, a flame in a boiler or the like, a high-temperature gas, high-temperature steam, liquid metal sodium in a nuclear generation facility, or the like is used, and as a fluid (medium) to be heated, water, vapor, chemical substance (fluid) to be heated for a reaction, or the like is used.

Specifically, the heat exchanger 10 is configured to include a body section 13 of a central portion, an upper outlet-side tube plate 11a and an upper outlet-side water chamber 14 (or also referred to as a compartment, a plenum, a header, or a manifold) mounted on an upper end of the body section 13 in an air-tight manner or a liquid-tight manner, and a lower inlet-side tube plate 11b and a lower inlet-side water chamber 15 (or also referred to as a compartment, a plenum, a header, or a manifold) mounted on a lower end of the body section 13 in a liquid-tight manner.

A fluid (medium)-to-be-heated introduction tube 17 for introducing a fluid (medium) to be heated 16 is connected to the inlet-side water chamber 15, and a fluid (medium)-to-be-heated discharge tube 18 is connected to the outlet-side water chamber 14. Further, a heating fluid (medium) introduction tube 20 for introducing a heating fluid (medium) 19 is connected to a lower end portion on one side of the body section 13, and a heating fluid (medium) discharge tube 21 is connected to an upper end portion on the other side of the body section 13.

The large number of (in the illustrated example, for convenience, two) heat transfer tubes 12 are disposed in the body section 13, and an upper end of each of the heat transfer tubes 12 protrudes into the outlet-side water chamber 14 by passing through a hole drilled in the outlet-side tube plate 11a and a stub 22 (refer to Fig. 2) (described later). Further, a lower end of each of the heat transfer tubes 12 also likewise protrudes into the inlet-side water chamber 15 by passing through a hole drilled in the inlet-side tube plate 11b and a stub (not shown). Then, end pieces 24 (refer to Fig. 2) (described later) are joined to both ends of all of the stub 22 and the heat transfer tube 12 by welding.

In the heat exchanger 10 described above, the heating fluid (medium) 19 is introduced from the heating fluid (medium) introduction tube 20 into the body section 13, heats the fluid (medium) to be heated 16 in the heat transfer tubes 12, and is then discharged from the heating fluid (medium) discharge tube 21. Further, the fluid (medium) to be heated 16 is introduced from the fluid (medium)-to-be-heated introduction tube 17 into the inlet-side water chamber 15, heated by the heating fluid (medium) 19 while flowing through the large number of heat transfer tubes 12, and then discharged from the fluid (medium)-to-be-heated discharge tube 18 through the outlet-side water chamber 14.

In addition, as the heat transfer tube 12 shown in Fig. 1, a single fold tube (a single tube) type made of a straight tube is shown as an example. However, there is no limitation thereto, and it is possible to use tubes having various shapes, such as a U-tube type, a helical coil type, and a multiple tube type (a double or more tube). Further, reference numeral 23 in Fig. 1 denotes a baffle plate.

Next, the tube-tube plate joint structure in the portion A of Fig. 1 will be described based on Fig. 2. In addition, since a tube-tube plate joint structure in the portion B of Fig. 1 is also the same structure, Fig. 2 is referred to hear and overlapping description is omitted.

As described above, a large number of holes for the passage of the respective heat transfer tubes 12 are drilled in the outlet-side tube plate 11a. The stub 22 protruding into the outlet-side water chamber 14 is integrally formed at the outlet-side tube plate 11a around each of the holes.

Then, an end portion of each of the heat transfer tubes 12 is inserted into the hole drilled in the outlet-side tube plate 11a and the stub 22, and each of the heat transfer tubes 12 is expanded at a required portion by a well-known tube expander, thereby being fixed in close contact with the inner surface of each of the holes drilled in the outlet-side tube plate 11a. In addition, there is also a case where each of the heat transfer tubes 12 is not expanded.

In addition, in this example, a ring-shaped end piece 24 is connected to the end faces of each of the stubs 22 and each of the heat transfer tubes 12 in order to receive loads of the outlet-side tube plate 11a or the stub 22 and the heat transfer tube 12.

Specifically, first, the inner diameter of the stub 22 is set to be slightly larger than the outer diameter of the heat transfer tube 12, whereby a predetermined clearance C is provided between the inner circumferential surface of the stub 22 and the outer circumferential surface of an end portion of the heat transfer tube 12. Then, the end piece 24 is formed as a grooved (a channel type) end piece having an arc-shaped groove bottom, and an end face (an inside end face) of an inside tubular portion 24a thereof is butt-welded to the end face of the heat transfer tube 12 and an end face (an outside end face) of an outside tubular portion 24b is butt-welded to the end face of the stub 22. That is, a groove which has a bottom having an arc-shaped longitudinal section and is open in one end face is formed over the entire circumference in the ring-shaped end piece 24, and the end face (the inside end face) of the inside tubular portion 24a which is located on the inside with the groove as a boundary is butt-welded to the end face of the heat transfer tube 12 and the end face (the outside end face) of the outside tubular portion 24b which is located on the outside with the groove as a boundary is butt-welded to the end face of the stub 22.

In the illustrated example, since the outlet-side tube plate 11a, the heat transfer tube 12, and the end piece 24 are made of the same material such as ferrite steel, an inside welded portion Wa and an outside welded portion Wb are directly butt-welded at the same weld height. At this time, since the inside welded portion Wa and the outside welded portion Wb are at the same weld height, it is easy to secure a welding work space, and thus it is possible to perform laser welding in one pass from the inner surface sides of the heat transfer tube 12 and the inside tubular portion 24a of the end piece 24. Of course, laser welding may be performed in one pass from the outer surface sides of the heat transfer tube 12 and the outside tubular portion 24b of the end piece 24.

Further, as shown in Fig. 3, a configuration may be made such that it is possible to more reliably maintain the clearance C by making the weld heights of the inside welded portion Wa (the inside end face of the end piece 24) and the outside welded portion Wb (the outside end face of the end piece 24) different from each other and individually welding the respective portions from the inside and the outside. In addition, Fig. 3A shows a case where the inside end face of the end piece 24 is higher than the outside end face (is located on the upper side in Fig. 3A) and Fig. 3B shows a case where the inside end face of the end piece 24 is lower than the outside end face (is located on the lower side in Fig. 3B).

The clearance C is appropriately set according to the conditions such as making beads not adher to each other in the inside welded portion Wa and the outside welded portion Wb, or tube pitch setting in the heat transfer tubes 12. Further, the end piece 24 is made such that the outer diameter thereof almost coincides with the outer diameter of the stub 22 and the inner diameter almost coincides with the inner diameter of the heat transfer tube 12.

The heat exchanger 10 configured in this manner is manufactured by inserting the respective heat transfer tubes 12 into the outlet-side and inlet-side tube plates 11a and 11b and the large number of cylindrical stubs 22 protruding toward the sides of the outlet-side and inlet-side water chambers 14 and 15, of the tube plates 11a and 11b, with the clearance C provided between the outer circumferential surface of the end portion of each of the heat transfer tubes 12 and the inner circumferential surface of each of the stubs 22 by making the inner diameter of each of the stubs 22 slightly larger than the outer diameter of each of the heat transfer tubes 12, or the like, and thereafter, butt-welding the end faces of the inside tubular portion 24a and the outside tubular portion 24b in each of the ring-shaped and grooved end pieces 24 to the end faces of each of the heat transfer tubes 12 and each of the stubs 22 with the end face of the outside tubular portion 24b made to correspond to the end face of each of the stubs 22 and the end face of the inside tubular portion 24a made to correspond to the end face of each of the heat transfer tubes 12.

At this time, in a case where the materials of the outlet-side and inlet-side tube plates 11a and 11b and each of the heat transfer tubes 12 are the same, it is possible to directly join the end faces of the inside tubular portion 24a and the outside tubular portion 24b in the end piece 24 of the same material as these materials to the end faces of the heat transfer tube 12 and the stub 22 with the weld heights of the inside welded portion Wa and the outside welded portion Wb made to be the same.

In this way, according to this example, since the clearance C is provided between the inner circumferential surface of each of the stubs 22 of the outlet-side and inlet-side tuber plates 11a and 11b and the outer circumferential surface of the end portion of the heat transfer tube 12 and the end faces of the inside tubular portion 24a and the outside tubular portion 24b in the end piece 24 are butt-welded to the end faces of the heat transfer tube 12 and the stub 22, structure discontinuity of the respective joining portions (refer to the inside welded portion Wa and the outside welded portion Wb) of the heat transfer tube 12 and the stub 22 can be reduced, and thus stress concentration on the welded portion under an operation of equipment is effectively reduced, whereby reliability can be enhanced. In addition, it is possible to secure manufacturability due to the welding from the sides of the outlet-side and inlet-side water chambers 14 and 15, and a change in thickness of the joining portion (refer to the inside welded portion Wa and the outside welded portion Wb) is eliminated, and thus volumetric inspection such as radiation transmission inspection (RT inspection) becomes possible.

Further, in a case of performing welding with the weld heights of the inside welded portion Wa and the outside welded portion Wb made to be the same, it becomes possible to perform laser welding in one pass from the inner surface side of the heat transfer tube 12, or the like, and thus the number of manufacturing processes can be significantly reduced, and compacting of the equipment becomes possible due to a tube pitch reduction.

### Example 2

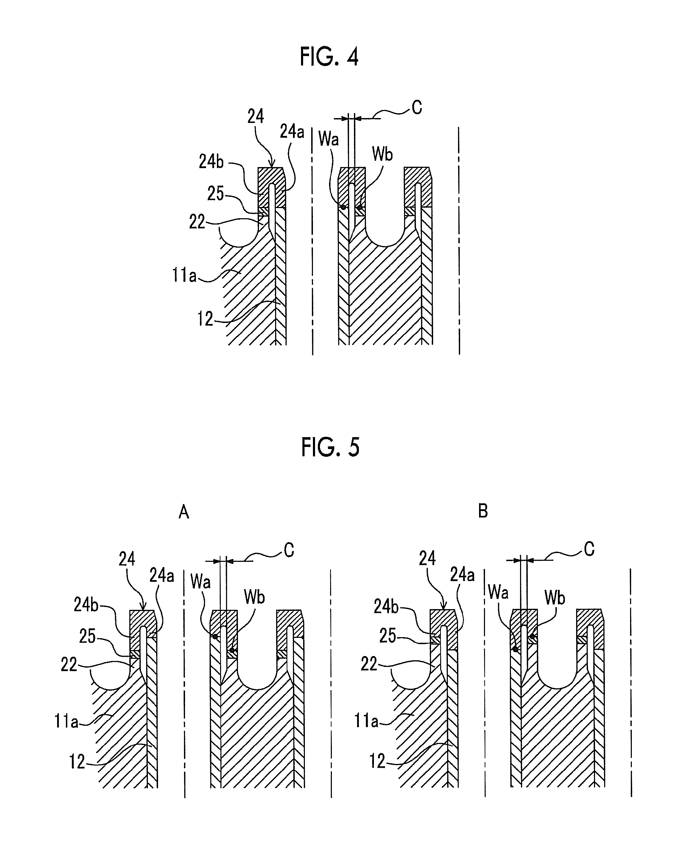

Fig. 4 is an enlarged detail view of the portion A of Fig. 1, showing Example 2 of the present invention, and Fig. 5 is an enlarged detail view of the portion A of Fig. 1, likewise showing a change example of a weld height, in which Fig. 5A shows a case where an inside end face of an end piece is higher than an outside end face (is located on the upper side in Fig. 5A) and Fig. 5B shows a case where an inside end face of an end piece is lower than an outside end face (is located on the lower side in Fig. 5B).

This is an example made such that in the tube-tube plate joint structure of Example 1, in a case where the materials of the outlet-side and inlet-side tube plates 11a and 11b and the heat transfer tube 12 are different from each other, the end face of the outside tubular portion 24b in the end piece 24 of the same material as the heat transfer tube 12 made of Inconel or the like is butt-welded to the end face of the stub 22 made of ferrite steel or the like, on which a build-up welded portion 25 is formed of the same material as the end piece 24 in advance. Other configurations are the same as those in Example 1, and therefore, the same members and sites as those in Fig. 2 are denoted by the same reference numerals and overlapping description is omitted.

Further, also in this example, as shown in Fig. 5, a configuration may be made such that it is possible to more reliably maintain the clearance C by making the weld heights of the inside welded portion Wa (the inside end face of the end piece 24) and the outside welded portion Wb (the outside end face of the end piece 24) different from each other and individually welding the respective portions from the inside and the outside. In addition, Fig. 5A shows a case where the inside end face of the end piece 24 is higher than the outside end face (is located on the upper side in Fig. 5A) and Fig. 5B shows a case where the inside end face of the end piece 24 is lower than the outside end face (is located on the lower side in Fig. 5B).

According to this, in addition to the same operation and effects as those in Example 1, the advantages that the joining of welded portions of different materials is possible and a thermal shock to the welded portions of different materials can also be reduced can be obtained.

### Example 3

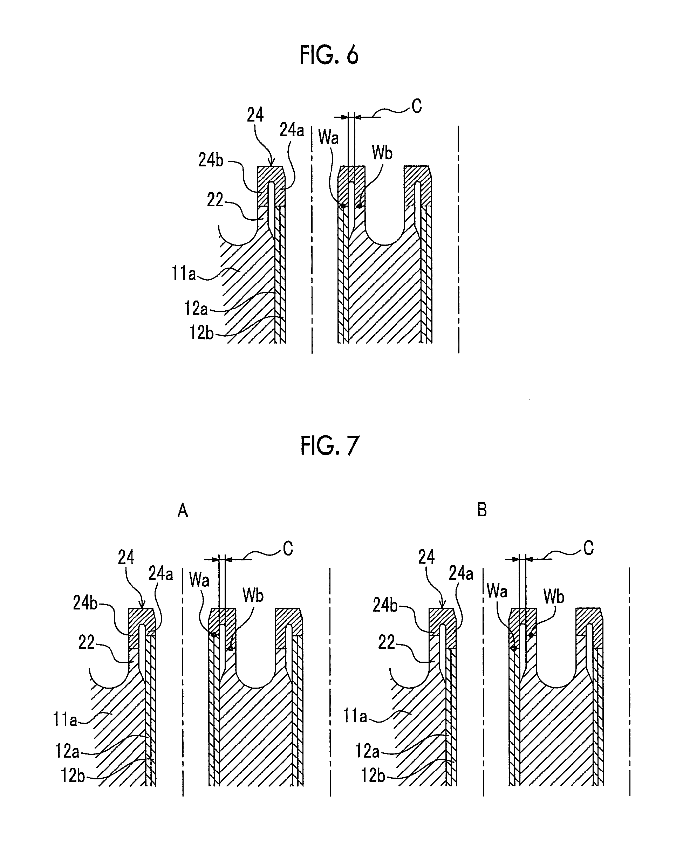

Fig. 6 is an enlarged detail view of the portion A of Fig. 1, showing Example 3 of the present invention, and Fig. 7 is an enlarged detail view of the portion A of Fig. 1, likewise showing a change example of a weld height, in which Fig. 7A shows a case where an inside end face of an end piece is higher than an outside end face (is located on the upper side in Fig. 7A) and Fig. 7B shows a case where an inside end face of an end piece is lower than an outside end face (is located on the lower side in Fig. 7B).

This is an example in which in the tube-tube plate joint structure of Example 1, the heat transfer tube 12 is made so as to be a double tube (a multiple tube) composed of an outside heat transfer tube 12a and an inside heat transfer tube 12b. Other configurations are the same as those in Example 1, and therefore, the same members and sites as those in Fig. 2 are denoted by the same reference numerals and overlapping description is omitted.

Further, also in this example, as shown in Fig. 7, a configuration may be made such that it is possible to more reliably maintain the clearance C by making the weld heights of the inside welded portion Wa (the inside end face of the end piece 24) and the outside welded portion Wb (the outside end face of the end piece 24) different from each other and individually welding the respective portions from the inside and the outside. In addition, Fig. 7A shows a case where the inside end face of the end piece 24 is higher than the outside end face (is located on the upper side in Fig. 7A) and Fig. 7B shows a case where the inside end face of the end piece 24 is lower than the outside end face (is located on the lower side in Fig. 7B).

According to this, in addition to the same operation and effects as those in Example 1, the advantage that strengthening of the boundary between the heating fluid (medium) and the fluid (medium) to be heated is attained by the heat transfer tubes 12a and 12b of a double tube type can be obtained.

### Example 4

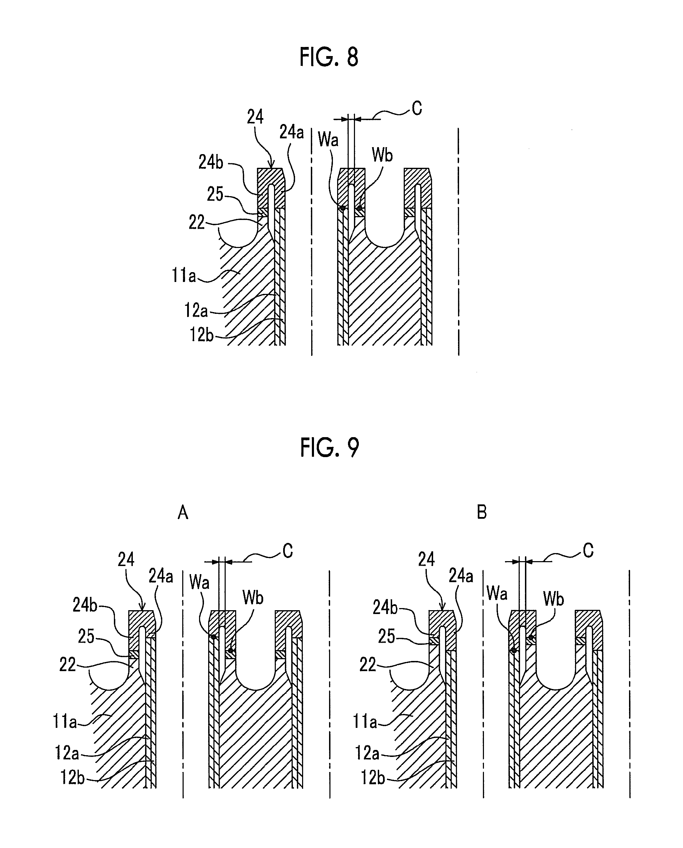

Fig. 8 is an enlarged detail view of the portion A of Fig. 1, showing Example 4 of the present invention, and Fig. 9 is an enlarged detail view of the portion A of Fig. 1, likewise showing a change example of a weld height, in which Fig. 9A shows a case where an inside end face of an end piece is higher than an outside end face (is located on the upper side in Fig. 9A) and Fig. 9B shows a case where an inside end face of an end piece is lower than an outside end face (is located on the lower side in Fig. 9B).

This is an example in which in the tube-tube plate joint structure of Example 2, the heat transfer tube 12 is made so as to be a double tube (a multiple tube) composed of the outside heat transfer tube 12a and the inside heat transfer tube 12b. Other configurations are the same as those in Example 2, and therefore, the same members and sites as those in Fig. 4 are denoted by the same reference numerals and overlapping description is omitted.

Further, also in this example, as shown in Fig. 9, a configuration may be made such that it is possible to more reliably maintain the clearance C by making the weld heights of the inside welded portion Wa (the inside end face of the end piece 24) and the outside welded portion Wb (the outside end face of the end piece 24) different from each other and individually welding the respective portions from the inside and the outside. In addition, Fig. 9A shows a case where the inside end face of the end piece 24 is higher than the outside end face (is located on the upper side in Fig. 9A) and Fig. 9B shows a case where the inside end face of the end piece 24 is lower than the outside end face (is located on the lower side in Fig. 9B).

According to this, in addition to the same operation and effects as those in Example 2, the advantage that strengthening of the boundary between the heating fluid (medium) and the fluid (medium) to be heated is attained by the heat transfer tubes 12a and 12b of a double tube type can be obtained.

In addition, the present invention is not limited to each of the above-described examples, and it goes without saying that various changes are possible within a scope which does not depart from the gist of the present invention. For example, in each example, the clearance C is provided by performing diameter expansion processing on the stub 22 side. However, the clearance C may be provided by performing diameter reduction processing on the heat transfer tube 12 side, or processing both the stub 22 and the heat transfer tube 12.

### Industrial Applicability

The heat exchanger and the method for manufacturing a heat exchanger according to the present invention are suitable for application to a steam generator, a heater, a superheater, a water heater, a cooler, a condenser, and the like.

### Reference Signs List

- 10:: heat exchanger
- 11a:: outlet-side tube plate
- 11b:: inlet-side tube plate
- 12:: heat transfer tube
- 12a:: outside heat transfer tube
- 12b:: inside heat transfer tube
- 13:: body section
- 14:: outlet-side water chamber
- 15:: inlet-side water chamber
- 16:: fluid (medium) to be heated
- 17:: fluid (medium)-to-be-heated introduction tube
- 18:: fluid (medium)-to-be-heated discharge tube
- 19:: heating fluid (medium)
- 20:: heating fluid (medium) introduction tube
- 21:: heating fluid (medium) discharge tube
- 22:: stub
- 23:: baffle plate
- 24:: end piece
- 24a:: inside tubular portion
- 24b:: outside tubular portion
- C:: clearance
- Wa:: inside welded portion
- Wb:: outside welded portion

## Claims

1. A heat exchanger comprising:
a heat transfer tube provided between tube plates,
wherein a clearance is provided between an inner circumferential surface of a cylindrical stub protruding toward a water chamber side of each of the tube plates and an outer circumferential surface of an end portion of the heat transfer tube which is inserted into the stub, and
an inside and an outside end faces of a ring-shaped and grooved end piece are butt-welded to end faces of the heat transfer tube and the stub with the outside end face made to correspond to the end face of the stub and the inside end face made to correspond to the end face of the heat transfer tube.

2. The heat exchanger according to Claim 1, wherein in a case where materials of the tube plate and the heat transfer tube are the same, inside and outside end faces of the end piece of the same material as these materials are directly joined to the end faces of the heat transfer tube and the stub.

3. The heat exchanger according to Claim 1, wherein in a case where materials of the tube plate and the heat transfer tube are different from each other, the outside end face of the end piece of the same material as the heat transfer tube is joined to the end face of the stub on which a build-up welded portion is formed of the same material as the end piece in advance.

4. The heat exchanger according to any one of Claims 1 to 3, wherein weld heights of the inside and outside end faces of the end piece are the same.

5. The heat exchanger according to any one of Claims 1 to 3, wherein weld heights of the inside and outside end faces of the end piece are different from each other.

6. The heat exchanger according to any one of Claims 1 to 5, wherein the heat transfer tube is a multiple tube.

7. A method for manufacturing a heat exchanger in which a large number of heat transfer tubes are provided between tube plates, the method comprising:
inserting the respective heat transfer tubes into the tube plates and a large number of cylindrical stubs protruding toward a water chamber side of the tube plates with a clearance provided between an outer circumferential surface of an end portion of each of the heat transfer tubes and an inner circumferential surface of each of the stubs; and
respectively butt-welding an inside and an outside end faces of a ring-shaped and grooved end piece to end faces of each of the heat transfer tubes and each of the stubs with the outside end face made to correspond to the end face of each of the stubs and the inside end face made to correspond to the end face of each of the heat transfer tubes.

8. The method for manufacturing a heat exchanger according to Claim 7, wherein in a case where materials of the tube plate and the heat transfer tube are the same, inside and outside end faces of the end piece of the same material as these materials are directly joined to the end faces of the heat transfer tube and the stub.

9. The method for manufacturing a heat exchanger according to Claim 7, wherein in a case where materials of the tube plate and the heat transfer tube are different from each other, the outside end face of the end piece of the same material as the heat transfer tube is joined to the end face of the stub on which a build-up welded portion is formed of the same material as the end piece in advance.

10. The method for manufacturing a heat exchanger according to any one of Claims 7 to 9, wherein the inside and outside end faces of the end piece are joined at the same weld height.

11. The method for manufacturing a heat exchanger according to any one of Claims 7 to 9, wherein the inside and outside end faces of the end piece are joined at different weld heights.

12. The method for manufacturing a heat exchanger according to any one of Claims 7 to 11, wherein a multiple tube is used for the heat transfer tube.
